# DEMANDE DE BREVET EUROPEEN

(11) **EP 0 704 645 A1**
(43) Date de publication de la demande: **03.04.1996**
(21) Numéro de dépôt: 95402187.9
(22) Date de dépôt: 29.09.1995
(51) Int. Cl.: F16H 61/36

(54) **Dispositif perfectionné de commande de boîte de vitesses par câbles**

(30) Priorité: 30.09.1994 FR 9411712; 30.09.1994 FR 9411713
(71) Demandeur: REGIE NATIONALE DES USINES RENAULT S.A., F-92109 Boulogne Billancourt (FR)
(72) Inventeur: Lebreton, Eric, F-75015 Paris (FR)

(57) **Abrégé**

Dispositif de commande de boîte de vitesses par câbles comprenant :
- une embase (50) ;
- un câble de passage de vitesses (14) muni d'une gaine (22) fixée sur l'embase (50) ;
- un câble de sélection de vitesses (18) muni d'une gaine (38) fixée sur l'embase (50) ;
- un élément tournant de sélection de vitesses (60,64) supporté sur l'embase (50) par un ou deux paliers qui définissent entre eux une zone de palier de manière à pouvoir tourner autour d'un axe géométrique (A) de sélection de vitesses ;
- un doigt de sélection de vitesses (10) fixé à l'élément tournant de sélection de vitesses (60, 64) une extrémité (48) de l'âme du câble de sélection de vitesses (18) étant fixée à ce doigt (10) ;
- un élément tournant de passage de vitesses (70) supporté sur l'élément tournant de sélection de vitesses (60, 64, 66) de manière à pouvoir tourner autour d'un axe géométrique (B) de passage de vitesses ;
- un doigt (8) de passage de vitesses fixé à l'élément tournant de passage de vitesses, une extrémité (32) de l'âme (20) du câble de passage de vitesses (14) étant fixée à ce doigt (8) ;
- et un levier de commande (2) fixé à l'élément tournant de passage de vitesses qui est agencé sensiblement perpendiculairement aux câbles de passage et de sélection de vitesses (14, 18);

caractérisé en ce que la gaine (38) du câble de sélection de vitesses (18) est fixée à l'embase (50) sensiblement selon la direction de déplacement de l'extrémité (48) du doigt (10) de sélection de vitesses, et en ce que l'axe géométrique (A) de sélection de vitesses est orienté sensiblement à 45° par rapport à la verticale.

## Description

L'invention concerne un dispositif perfectionné de commande de boîte de vitesses par câbles dans lequel deux câbles de commande sont utilisés pour transmettre des forces d'actionnement d'un levier de commande manipulé par le conducteur à une boîte de vitesses située à distance du levier de commande.

Plus précisément l'invention concerne un dispositif de commande de boîte de vitesses par câbles comprenant :
- une embase ;
- un câble de passage de vitesses ;
- un câble de sélection de vitesses ;
- un élément tournant de sélection de vitesses supporté sur l'embase par un ou par deux paliers qui définissent entre eux une zone de palier de manière à pouvoir tourner autour d'un axe géométrique (A) de sélection de vitesses ;
- un doigt de sélection de vitesses fixé à l'élément tournant de sélection de vitesses, une extrémité de l'âme du câble de sélection de vitesses étant fixée à ce doigt ;
- un élément tournant de passage de vitesses supporté sur l'élément tournant de sélection de vitesses de manière à pouvoir tourner autour d'un axe géométrique (B) de passage de vitesses ;
- un doigt de passage de vitesses fixé à l'élément tournant de passage de vitesses, une extrémité de l'âme du câble de passage de vitesses étant fixée à ce doigt;
- et un levier de commande.

On connaît déjà du document FR-A-2.425.671 un dispositif de commande de boîte de vitesse par câbles qui comporte trois axes de rotation. Le troisième axe permet un renvoi à 90° qui transmet le mouvement de traction ou de compression au câble de sélection.

Dans ce dispositif le nombre de pièces de la chaîne cinématique est important et augmente le coût de fabrication. Il présente en outre l'inconvénient de diminuer le rendement de transmission des efforts et d'entraîner une démultiplication variable.

On connaît déjà du document FR-A-2.425.671 un dispositif de commande de boîte de vitesses par câbles qui comporte trois axes de rotation. Le troisième axe permet un envoi à 90° qui transmet le mouvement de traction ou de compression au câble de sélection.

Dans ce dispositif le nombre de pièces de la chaîne cinématique est important et augmente le coût de fabrication. Il présente en outre l'inconvénient de diminuer le rendement de transmission et d'entraîner une démultiplication variable.

On connaît également du document FR-A-2.694.615 un dispositif à deux axes seulement. L'axe géométrique de passage de vitesses est disposé selon une direction gauche droite du véhicule tandis que l'axe géométrique de sélection de vitesses coupe l'axe de passage de vitesses avec un angle d'inclinaison, par exemple de 45°.

Lorsque le levier de commande est actionné, l'extrémité du doigt de sélection de vitesses se déplace selon une direction qui fait un angle de 45° avec la direction du câble de sélection de vitesses. Cela a pour effet de diminuer la course utile transmise au câble de sélection de vitesses. En effet, seule la projection de déplacement de l'extrémité du doigt de sélection de vitesses sur une direction avant arrière peut être utilisée pour actionner le câble de sélection de vitesses. Par suite, l'effort nécessaire pour effectuer une sélection de vitesses, la longueur du doigt de sélection de vitesses étant identique, est augmentée dans la proportion inverse.

La présente invention a précisément pour objet un dispositif de commande de boîte de vitesses par câbles qui remédie à ces inconvénients.

Ce dispositif doit être simple, comporter un nombre réduit de pièces, et donc peu coûteux à fabriquer. Il doit d'autre part permettre d'obtenir un déplacement de l'extrémité du câble de sélection de vitesses sensiblement égal au déplacement de l'extrémité du doigt de sélection de vitesses. La démultiplication doit être constante.

Ces buts sont atteints, conformément à l'invention, grâce au fait que la gaine du câble de sélection de vitesses est fixée à l'embase sensiblement selon la seconde direction de déplacement de l'extrémité du doigt de sélection de vitesses.

Ainsi, la totalité de la course de l'extrémité du doigt de sélection de vitesses est utilisable.

Le dispositif décrit dans la publication FR-2.694.615 implique la réalisation de pièces complexes à réaliser. En particulier l'élément tournant de sélection de vitesses est constitué par une pièce en forme d'anneau qui forme une fenêtre au travers de laquelle passe le levier de sélection de vitesses.

La présente invention a précisément pour objet un dispositif de commande de boîte de vitesses par câbles qui remédie à ces inconvénients.

Ce dispositif doit être simple, comporter un nombre réduit de pièces, et donc être peu coûteux à fabriquer.

Ces buts sont atteints, conformément à l'invention, grâce au fait que les axes géométriques de sélection de vitesses et de passage de vitesses sont orthogonaux ou sécants en un point extérieur à la zone de palier de l'élément tournant de sélection de vitesses.

Ainsi, il est possible de réaliser un dispositif qui utilise deux axes de rotation seulement sans recourir à des pièces de conception et de fabrication complexes.

De préférence, l'axe géométrique de sélection de vitesses est situé dans un plan vertical orienté selon une direction longitudinale avant-arrière du véhicule.

Cette caractéristique permet de disposer les câbles de passage et de sélection de vitesses sensiblement parallèlement, et par suite de réduire l'encombrement du dispositif.

De préférence encore le câble de sélection de vitesses est constitué d'une gaine fixée à l'embase et d'une âme apte à coulisser dans la gaine, le levier de commande provoquant un déplacement de l'extrémité du doigt de passage de vitesses selon une première direction lorsqu'il est actionné dans un sens de passage de vitesses et un déplacement de l'extrémité du doigt de sélection de vitesses selon une seconde direction lorsqu'il est actionné dans un sens de sélection de vitesses, la gaine du câble de sélection de vitesses étant fixée à l'embase sensiblement selon la seconde direction de déplacement de l'extrémité du doigt de sélection de vitesses.

Cette caractéristique est particulièrement avantageuse parce qu'elle permet de disposer de toute la course du doigt de sélection de vitesses.

Selon une première variante de réalisation, le dispositif comporte une rotule qui remplit simultanément la fonction d'élément tournant de sélection de vitesses et d'élément tournant de passage de vitesses.

Selon une variante préférée de réalisation le dispositif comporte un étrier, un axe monté sur cet étrier, l'élément tournant de sélection de vitesses étant monté pivotant sur cet axe et comportant un bras sur lequel l'élément tournant de passage de vitesses est monté tournant.

Dans cette variante les axes de sélection et de passage de vitesses sont orthogonaux et l'élément tournant de sélection de vitesse est une pièce simple, constituée par un tube sur lequel sont fixés un bras et un doigt de sélection de vitesses. Le dispositif est donc peu coûteux à réaliser.

Selon une troisième variante de réalisation, l'élément tournant de sélection de vitesses comporte un bras monté tournant sur l'embase, l'élément tournant de passage de vitesses étant monté tournant par rapport à ce bras.

Dans cette variante, l'élément tournant de sélection de vitesses est une pièce simple et peu coûteuse à réaliser.

Selon une quatrième variante de réalisation, l'élément tournant de sélection de vitesses est constitué par un axe brisé constitué d'un segment monté sur l'embase et d'un segment sur lequel l'élément tournant de passage de vitesses est monté tournant.

Selon une cinquième variante de réalisation, l'élément tournant de sélection de vitesses comporte un axe monté tournant sur l'embase et un manchon fixé perpendiculairement sur cet axe, l'élément tournant de passage de vitesses étant monté pivotant dans le manchon.

Dans ces deux dernières variantes les axes de sélection de vitesses et de passage de vitesses ne sont pas orthogonaux mais sécants. Cependant ils se coupent en un point situé à l'extérieur de la zone de palier, telle qu'elle a été définie précédemment, ce qui permet de donner une forme simple à l'élément tournant de sélection de vitesses.

Selon une sixième variante de réalisation, l'élément tournant de sélection de vitesses est constitué par un cadre monté pivotant sur l'embase et l'élément tournant de passage de vitesses est constitué par un axe monté tournant dans le cadre.

D'autres caractéristiques et avantages de l'invention apparaîtront à la lecture de la description détaillée qui va suivre pour la compréhension de laquelle on se reportera aux dessins annexés dans lesquels :
- La figure 1 représente un premier mode de réalisation de l'invention dans lequel le levier de commande est monté sur une rotule ;
- Les figures 2 à 4 représentent un premier mode de réalisation préféré de l'invention ;
- La figure 5 est une vue schématique qui illustre la cinématique du dispositif représenté sur les figures 2 à 4 ;
- La figure 6 représente un troisième mode de réalisation de l'invention dans lequel l'élément tournant de sélection de vitesses inclut un cadre ;
- la figure 7 représente un quatrième mode de réalisation de l'invention ;
- la figure 8 représente un cinquième mode de réalisation de l'invention ;
- la figure 9 représente un sixième mode de réalisation de l'invention.

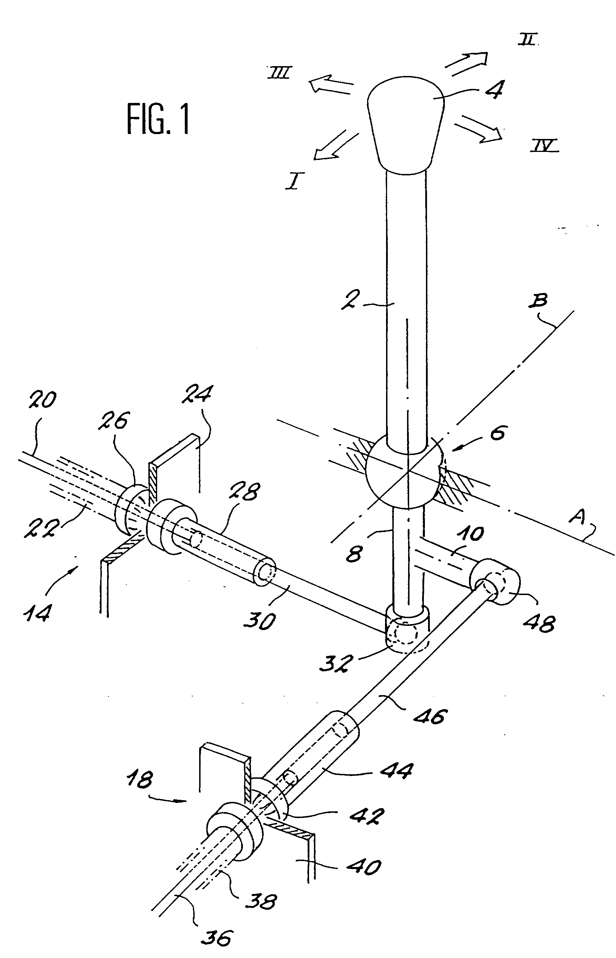

On a représenté sur la figure 1 un premier mode de réalisation de l'invention. Il comporte un levier 2 terminé par un pommeau 4 au moyen duquel le conducteur du véhicule peut actionner le levier 2. Ce dernier est fixé à une rotule 6. Un doigt de passage de vitesses 8 est fixé sous la rotule 6 et un doigt de sélection de vitesses 10 est fixé perpendiculairement sur le doigt 8. Grâce à la rotule 6 le levier 2 peut être déplacé autour d'un axe quelconque.

Toutefois, de manière connue, une grille en forme de H limite le déplacement du levier selon deux directions, à savoir respectivement une direction I-II orientée selon le sens gauche droite du véhicule et une direction III-IV orientée selon une direction avant arrière du véhicule. Le levier de commande 2 peut ainsi pivoter uniquement autour de deux axes, à savoir un axe A de sélection de vitesses et un axe B de passage de vitesses qui est perpendiculaire à l'axe A.

Le dispositif comporte en outre un câble de passage de vitesses désigné par la référence générale 14 et un câble de sélection de vitesses désigné par la référence générale 18.

De manière plus détaillée le câble de passage de vitesses 14 se compose d'une âme 20 qui peut coulisser dans une gaine 22. La gaine 22 est fixée sur une paroi 24 qui fait partie de l'embase du dispositif de commande de vitesses. La paroi 24 est perforée et reçoit un arrêt de gaine 26. L'arrêt de gaine 26 comporte, du côté de la paroi 24 opposée à la gaine 22, une articulation à rotule dans laquelle est reçu un tube de guidage rigide 28. Le tube 28 à un débattement conique de quelques degrés par rapport à l'axe de l'arrêt de gaine 26, par exemple de 3°, soit 6° de débattement au total. Une tige rigide 30 peut coulisser dans le tube de guidage 28. L'âme 20 du câble est fixée à une extrémité de la tige rigide 30. A son autre extrémité cette tige est fixée par une articulation à rotule 32 à l'extrémité du doigt de passage de vitesses 8.

De manière similaire le câble 18 de sélection de vitesses est constitué d'une âme 36 qui coulisse à l'intérieur d'une gaine 38. Un arrêt de gaine 42 est fixé à la paroi 40 solidaire de l'embase. Un tube de guidage 44 est articulé, par une articulation à rotule, sur l'arrêt de gaine 42. Une tige rigide est apte à coulisser dans le tube de guidage 44. La tige 46 est fixée par une articulation à rotule 48 à l'extrémité du doigt 10 de sélection de vitesses.

Le fonctionnement de ce dispositif est le suivant. Le conducteur du véhicule actionne tout d'abord le levier 2 selon la direction I-II de sélection de vitesses. Lorsque le levier est déplacé dans la direction de la flèche I le doigt 10 exerce une traction sur la tige rigide 46, ce qui entraîne l'âme 36 du câble de sélection de vitesses 18. Inversement, lorsque le levier 2 est poussé selon la direction de la flèche II, la tige rigide 46 pénètre dans le tube de guidage 44 et repousse l'âme 36 du câble de sélection de vitesses 18. Pendant ces opérations, le câble de passage de vitesses 14 est apte à pivoter autour de l'articulation à rotule définie entre l'arrêt de gaine 26 et le tube de guidage 28.

Le conducteur actionne alors le levier de commande 2 dans le sens de la flèche III ou de la flèche IV. Dans le premier cas, de manière identique à ce qui a été expliqué pour le câble de sélection de vitesses, l'âme 20 du câble de passage de vitesses 14 subit une traction transmise à la boîte de vitesses et qui permet, de manière connue, le passage d'une vitesse.

Inversement, lorsque le levier de commande 2 est poussé dans la direction de la flèche IV, l'âme 20 du câble de passage de vitesses 14 est repoussée dans la gaine 22, ce qui permet le passage d'une autre vitesse.

On constate ainsi que l'invention permet de réaliser la commande de sélection et de passage de vitesses d'une manière extrêmement simple, avec un nombre de pièces très limité.

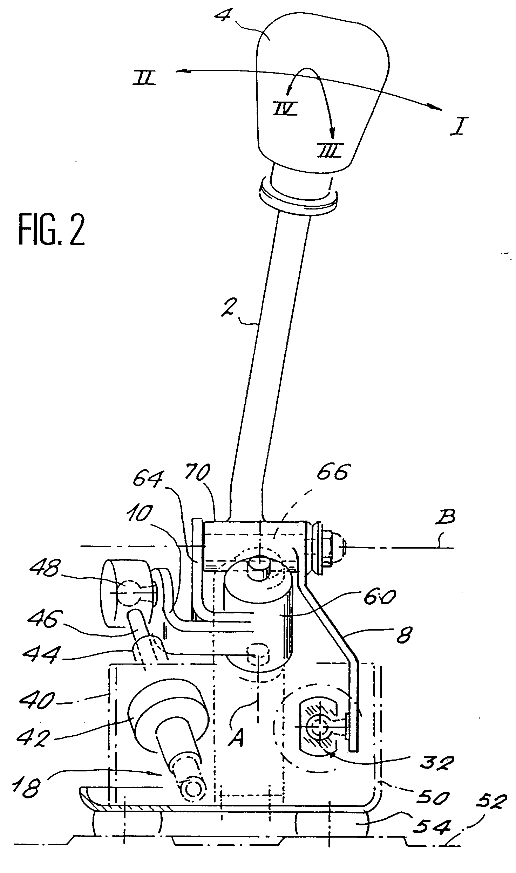

On a représenté sur les figures 2 à 5 un second mode de réalisation d'un dispositif de commande de vitesses par câbles conforme à l'invention.

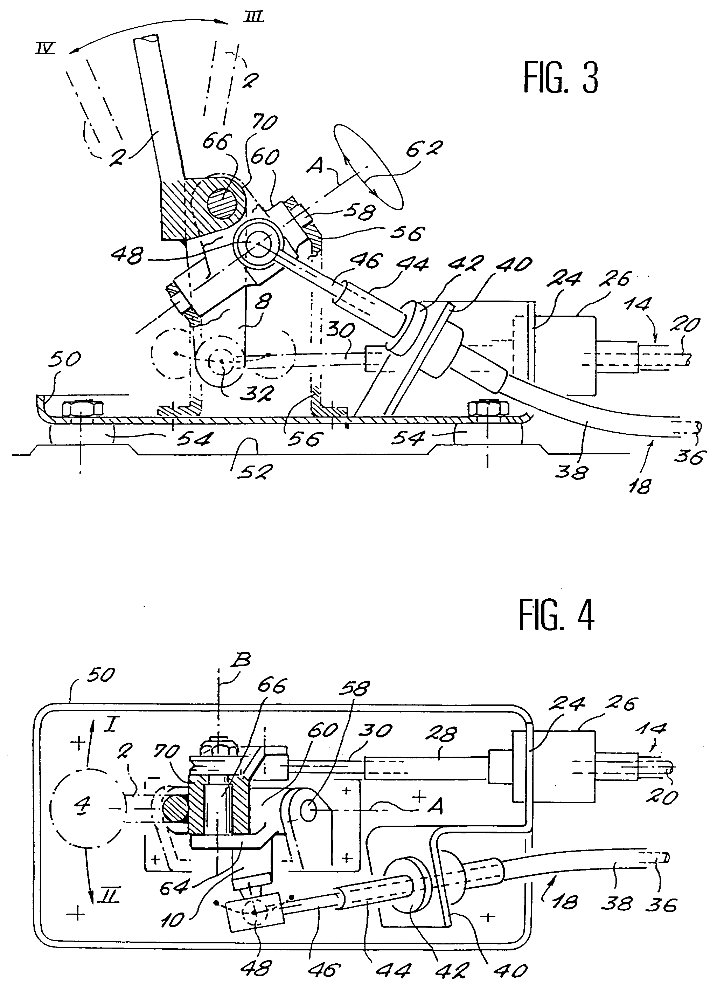

Une embase 50, réalisée par exemple en tôle emboutie, est fixée au châssis 52 d'un véhicule. Des blocs de caoutchouc 54 sont interposés entre l'embase 50 et le châssis 52 afin d'amortir le bruit et les vibrations. Un étrier 56 (voir figure 3) est fixé à l'embase 50. Un axe 58 est monté sur l'étrier 56 en position inclinée par rapport à la verticale. L'inclinaison de l'axe 58 est par exemple de 45° par rapport à la verticale.

C'est l'axe 58 qui définit l'axe géométrique A de sélection de vitesses. Cet axe A est situé dans un plan vertical orienté suivant la direction avant arrière du véhicule. Un manchon 60 est monté pivotant sur l'axe 58 comme schématisé par les flèches 62. Un bras 64 est fixé (par exemple soudé ou vissé) au manchon 60. Le bras 64 supporte un axe 66 qui définit l'axe géométrique de passage de vitesses B. L'axe B est orienté selon une direction gauche droite du véhicule. En conséquence les axes A et B sont orthogonaux. Le manchon 60, le bras 64 et l'axe 66 constituent ensemble l'élément tournant de sélection de vitesses.

D'autre part un doigt de sélection de vitesses 10 est fixé au manchon 60. L'arrêt de gaine 42, le tube de guidage 44 et la tige rigide 46 sont disposés perpendiculairement à la paroi 40. De manière identique à ce qui a été décrit en référence à la figure 1, le doigt de sélection de vitesses 10 permet d'actionner en traction et-en compression l'âme 36 du câble 18 de sélection de vitesses. La tige rigide 46 qui termine l'âme du câble de sélection de vitesses est fixée par une articulation à rotule 48 à l'extrémité du doigt de sélection de vitesses 10.

Un manchon 70 est monté pivotant autour de l'axe de passage de vitesses B sur l'axe 66 solidaire du bras 64 de l'élément tournant de sélection de vitesses. Un doigt de passage de vitesses 8 est fixé au manchon 70. Le doigt 8 comporte à son extrémité une articulation à rotule 32 qui permet d'actionner en translation et en compression le câble de passage de vitesses.

Un levier de commande 2 terminé par un pommeau 4 est fixé au manchon 70. Le conducteur du véhicule peut actionner le levier 2 au moyen du pommeau 4 dans la direction repérée par les flèches I et II de manière à provoquer une sélection de vitesses. L'action du levier 2 est transmise au manchon 70, puis à l'axe 66 qui fait partie de l'élément tournant de sélection de vitesses. Ceci a pour effet de faire pivoter cet élément tournant de sélection de vitesses autour de l'axe géométrique A matérialisé dans l'exemple de réalisation décrit par l'axe 58.

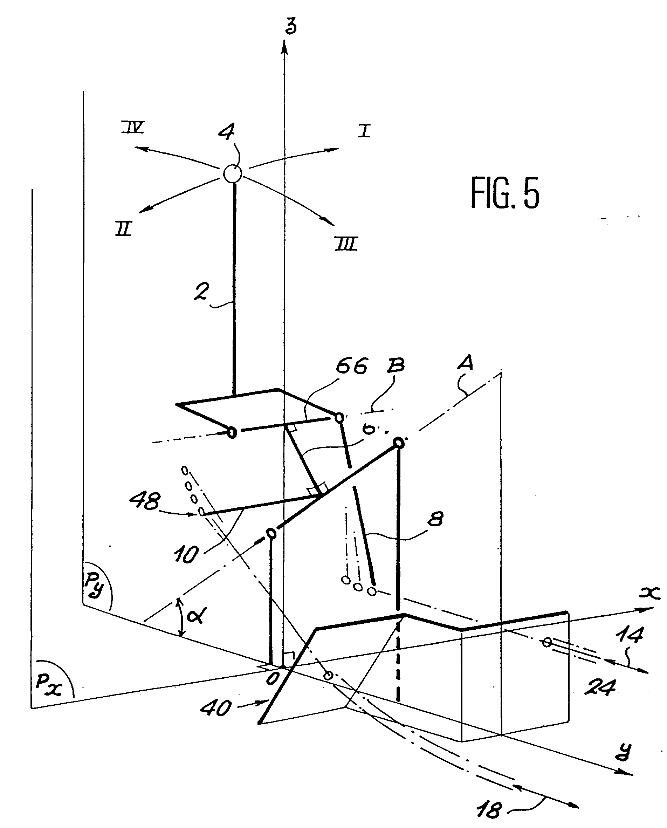

On a représenté sur la figure 5 une vue schématique en perspective qui illustre la position des différents axes et la cinématique du dispositif. On a défini un repère orthonormé x,y,z. L'axe x est orienté selon la direction gauche droite du véhicule, l'axe y selon la direction avant arrière, et l'axe z est orienté verticalement. L'axe A est contenu dans un plan vertical Py qui contient l'axe y. L'axe A fait un angle α, par exemple 45°, avec l'axe y. L'axe B est contenu dans le plan vertical Px qui contient l'axe x. Il est parallèle à cet axe x.

Etant donné que l'axe A est incliné à 45° par rapport à l'horizontale, le mouvement du levier 2 selon la direction de la flèche I ou II se traduit par un déplacement de l'extrémité du levier de sélection de vitesses 10 dans un plan perpendiculaire à l'axe A. De manière plus précise l'extrémité du doigt de sélection de vitesses matérialisée par l'articulation à rotule 48 suit une trajectoire en forme d'arc de cercle centrée sur l'axe A et de rayon égal à la longueur du doigt 10. Sur une courte distance la trajectoire de la rotule 48 peut être assimilée à une trajectoire rectiligne orientée à 45° par rapport à la verticale.

Conformément à l'invention, la paroi 40 faisant partie de l'embase 50 sur laquelle est fixé l'arrêt de gaine 42 du câble de sélection de vitesses 18 est disposée perpendiculairement à la trajectoire de la rotule 48 qui termine le doigt de sélection de vitesses 10. Grâce à cette caractéristique la quasi totalité de la course de la rotule 48 peut être transmise à l'âme 36 du câble de sélection de vitesses.

Le passage de vitesses s'effectue de manière classique par un déplacement du levier 2 selon une direction III ou IV, ce qui a pour effet d'actionner le doigt de passage de vitesses 8 et de tirer ou de pousser la tige rigide 30 qui est fixée à l'articulation à rotule 32 qui termine le doigt de passage de vitesses 8. On remarquera que la paroi 24 faisant partie de l'embase 50 est disposée verticalement de telle sorte que la quasi totalité de la course de l'extrémité du doigt de passage de vitesses peut être transmise utilement pour la commande de passage de vitesses.

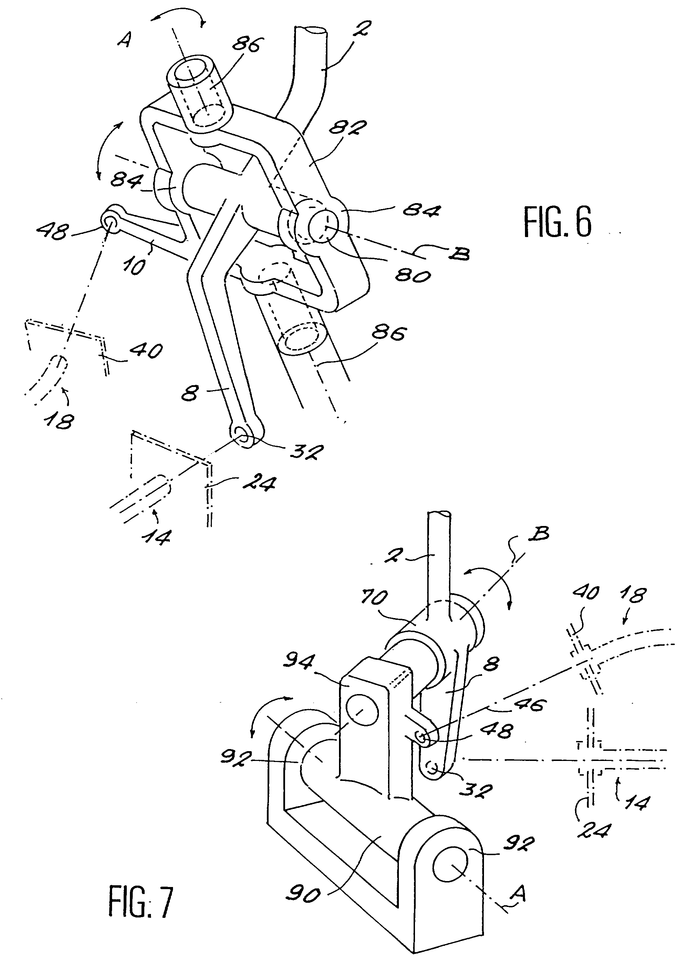

On a représenté sur la figure 6 un troisième mode de réalisation de l'invention.

L'élément tournant de passage de vitesses est constitué par un axe 80 qui matérialise l'axe B disposé selon la direction transversame gauche-droite du véhicule. L'axe 80 supporte le levier de vitesses 2 et, à sa partie inférieure le doigt 8 de passage de vitesses relié, comme on l'a décrit précédemment, au câble 14 de passage de vitesses. L'axe 80 est monté pivotant sur un cadre 82 qui comporte deux bagues 84 qui constituent des paliers pour l'axe 80. Deux demi-axes 86 permettent d'articuler le cadre 82 sur des paliers (non représentés) qui font partie de l'embase du dispositif de commande de vitesses selon l'invention. Les paliers solidaires de l'embase et les deux demi-axes 86 matérialisent l'axe A de sélection de vitesses.

Les axes A et B peuvent être sécants, comme représenté sur la figure 6, ou bien, dans une variante de réalisation, peuvent être orthogonaux. Il suffit pour cela que l'axe géométrique A soit légèrement décalé par rapport à l'axe géométrique B. Le cadre 82, les deux bagues 84 et les deux demi-axes 86 constituent ensemble l'élément de sélection de vitesses. En outre, un doigt 10 de sélection de vitesses est fixé au cadre 82. De manière identique à ce qui a été décrit précédemment, l'extrémité du doigt 10 est raccordée par une articulation à rotule à un tube rigide 46 fixé à l'âme du câble 18 de sélection de vitesses, ce qui permet, lorsque le levier 2 est manoeuvré selon le sens de flèches I et II d'obtenir un déplacement de l'extrémité du doigt 10 dans un plan perpendiculaire à l'axe A, et par suite de commander une sélection de vitesses.

Conformément à l'invention la paroi 40 à laquelle l'arrêt de gaine 42 du câble de sélection de vitesses est fixé définit un plan qui est perpendiculaire à la direction de déplacement de l'articulation à rotule 48 du doigt 10. En d'autre termes le plan défini par la paroi 40 est sensiblement parallèle à l'axe de sélection de vitesses A.

On constate donc que dans ce mode de réalisation également, la totalité de la course de l'extrémité du doigt de sélection de vitesses peut être utilisée directement parce que la traction et la compression du câble s'effectuent dans l'axe de sa fixation sur la paroi 40.

On a représenté sur la figure 7 un quatrième mode de réalisation de l'invention. L'élément tournant de sélection de vitesses peut être constitué, comme représenté sur la figure, par un axe 90 monté tournant sur deux paliers 92 qui font partie de l'embase du dispositif. Dans une variante de réalisation on pourrait prévoir un manchon monté tournant sur un axe fixe solidaire de l'embase.

Un bras 94 est fixé à l'axe 90. Le bras 94 supporte un axe 96 qui matérialise l'axe B de passage de vitesses. Le levier 2 de commande de vitesses est fixé à un manchon 70. Le doigt de passage de vitesses 8 est à son tour fixé à ce manchon.

Les axes A et B sont orthogonaux. L'espacement entre ces deux axes peut, si on le souhaite, être rendu très petit en diminuant la longueur du bras 94.

La paroi 40 qui fait partie de l'embase du dispositif de commande de vitesses est disposée perpendiculairement à la direction du point d'attache de la rotule qui termine la tige rigide 46. De cette manière, lorsque le levier 2 est déplacé suivant le sens des flèches I et II la totalité de la course de l'articulation à rotule 48 peut être utilisée pour commander une sélection de vitesses.

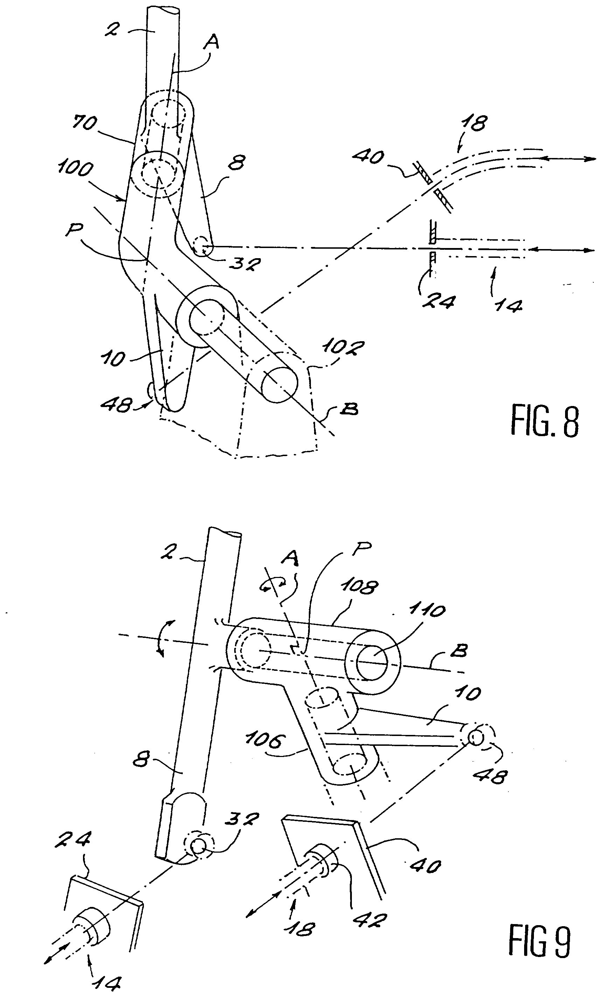

On a représenté sur la figure 8 un cinquième mode de réalisation d'un dispositif conforme à l'invention. L'élément tournant de sélection de vitesses 100 est un arbre brisé constitué de deux segments dont le décalage angulaire est par exemple de 45°. Une extrémité de l'arbre brisé 100 est montée tournante dans un palier 102 qui fait partie de l'embase du dispositif. Un doigt 10 de sélection de vitesses est fixé à ce segment. Un manchon 70 supportant le levier 2 de commande de vitesses et le doigt de passage de vitesses 8 est monté tournant sur l'autre partie. Comme on l'a déjà décrit pour les autres modes de réalisation, la paroi 40 est montée perpendiculairement au déplacement de l'extrémité du doigt de sélection de vitesses 10, ce qui permet de récupérer toute la course de cette extrémité.

On a représenté sur la figure 9 un sixième mode de réalisation d'un dispositif de commande de boîte de vitesses conforme à l'invention. L'élément tournant de sélection de vitesses est constitué par un axe 106 qui matérialise l'axe A de sélection de vitesses. L'axe 106 est monté tournant par rapport à l'embase d'une manière qui n'a pas été représentée sur la figure, par exemple par un palier situé à la partie inférieure de l'axe 106.

L'axe 106 est incliné par rapport à la verticale, par exemple de 45°. Il est situé, comme pour les variantes précédentes, dans un plan vertical orienté selon une direction avant arrière du véhicule. Un manchon 108 est fixé à l'extrémité supérieure de l'axe 106 perpendiculairement à la direction de l'axe A. L'axe 106 et le manchon 108 forment l'élément tournant de sélection de vitesses. Un doigt 10 de sélection de vitesses est fixé sur l'axe 106 perpendiculairement à ce dernier. Le doigt 10 est terminé par une rotule 48 fixée à une tige rigide 46 qui fait partie du câble de sélection de vitesses 18.

Un axe 110 est monté pivotant dans le manchon 108. Un levier de commande de vitesses 2 est monté perpendiculairement à l'axe 110. La partie inférieure de ce levier constitue le doigt de passage de vitesses 8.

Conformément à l'invention, la paroi 40 sur laquelle est fixé l'arrêt de gaine du câble de sélection de vitesses est disposé perpendiculairement à la course de l'extrémité 48a du levier 10. On récupère ainsi la totalité de la course de cette extrémité pour une commande de sélection de vitesses.

## Revendications

1. Dispositif de commande de boîte de vitesses par câbles comprenant :
- une embase (50) ;
- un câble de passage de vitesses (14) muni d'une gaine (22) fixée sur l'embase (50) ;
- un câble de sélection de vitesses (18) muni d'une gaine (38) fixée sur l'embase (50) ;
- un élément tournant de sélection de vitesses (60,64) supporté sur l'embase (50) par un ou deux paliers qui définissent entre eux une zone de palier de manière à pouvoir tourner autour d'un axe géométrique (A) de sélection de vitesses ;
- un doigt de sélection de vitesses (10) fixé à l'élément tournant de sélection de vitesses (60, 64) une extrémité (48) de l'âme du câble de sélection de vitesses (18) étant fixée à ce doigt (10) ;
- un élément tournant de passage de vitesses (70) supporté sur l'élément tournant de sélection de vitesses (60, 64, 66) de manière à pouvoir tourner autour d'un axe géométrique (B) de passage de vitesses ;
- un doigt (8) de passage de vitesses fixé à l'élément tournant de passage de vitesses, une extrémité (32) de l'âme (20) du câble de passage de vitesses (14) étant fixée à ce doigt (8) ;
- et un levier de commande (2) fixé à l'élément tournant de passage de vitesses qui est agencé sensiblement perpendiculairement aux câbles de passage et de sélection de vitesses (14, 18);
caractérisé en ce que la gaine (38) du câble de sélection de vitesses (18) est fixée à l'embase (50) sensiblement selon la direction de déplacement de l'extrémité (48) du doigt (10) de sélection de vitesses, et en ce que l'axe géométrique (A) de sélection de vitesses est orienté sensiblement à 45° par rapport à la verticale.

2. Dispositif de commande selon la revendication 1, caractérisé en ce que les axes géométriques (A) de sélection de vitesses et (B) de passage de vitesses sont orthogonaux non sécants ou sont sécants en un point extérieur à la zone de palier de l'élément tournant de sélection de vitesses.

3. Dispositif de commande selon la revendication 1 ou 2, caractérisé en ce que l'axe géométrique (A) de sélection de vitesses est situé dans un plan vertical orienté selon une direction longitudinale avant-arrière du véhicule.

4. Dispositif de commande selon la revendication 1 ou 3, caractérisé en ce qu'il comporte une rotule (6) qui remplit simultanément la fonction d'élément tournant de sélection de vitesses et d'élément tournant de passage de vitesses.

5. Dispositif de commande selon la revendication 1, 2 ou 3, caractérisé en ce que le câble de sélection de vitesses est constitué d'une gaine (38) fixée à l'embase (50) et d'une âme (36) apte à coulisser dans la gaine (38), en ce que le levier de commande (2) provoque un déplacement de l'extrémité du doigt de passage de vitesses selon une première direction lorsqu'il est actionné dans un sens de passage de vitesses et un déplacement de l'extrémité du doigt de sélection de vitesses selon une seconde direction lorsqu'il est actionné dans un sens de sélection de vitesses, la gaine du câble de sélection de vitesses est fixée à l'embase sensiblement selon la seconde direction de déplacement de l'extrémité du doigt de sélection de vitesses.

6. Dispositif de commande selon la revendication 1, 2, 3 ou 5, caractérisé en ce qu'il comporte étrier (56), un axe (58) monté sur cet étrier (56), l'élément tournant de sélection de vitesses (60) étant monté pivotant sur cet axe (58) et comportant un bras (64) sur lequel l'élément tournant de passage de vitesses (60) est monté tournant.

7. Dispositif de commande selon l'une des revendications 1, 2, 3 ou 5, caractérisé en ce que l'élément tournant de sélection de vitesses comporte un bras (94) monté tournant sur l'embase (50), l'élément tournant de passage de vitesses étant monté tournant par rapport à ce bras (94).

8. Dispositif de commande selon l'une des revendications 1, 2, 3 ou 5, caractérisé en ce que l'élément tournant de sélection de vitesses est constitué par un axe brisé (100) constitué d'un segment monté sur l'embase (50) et d'un segment sur lequel l'élément tournant de passage de vitesses (70) est monté tournant.

9. Dispositif de commande selon l'une des revendications 1, 2, 3 ou 5, caractérisé en ce que l'élément tournant de sélection de vitesses comporte un axe (106) monté tournant sur l'embase (50) et un manchon (108) fixé perpendiculairement sur cet axe (106), l'élément tournant de passage de vitesses (110) étant monté pivotant dans le manchon (108).

10. Dispositif de commande selon la revendication 2, 3 ou 5, caractérisé en ce que l'élément tournant de sélection de vitesses constitué par un cadre (85) monté pivotant sur l'embase (50)et en ce que l'élément tournant de passage de vitesses est constitué par un axe (80) monté tournant dans le cadre(82).
